# EUROPEAN PATENT APPLICATION

(11) **EP 3 355 519 A1**
(43) Date of publication of application: **01.08.2018**
(21) Application number: 17305102.0
(22) Date of filing: 30.01.2017
(51) Int. Cl.: H04L 12/24, H04L 12/28, H04L 12/947

(54) **METHOD FOR MANAGING SERVICES CHAINING AT A NETWORK EQUIPMENT, CORRESPONDING NETWORK EQUIPMENT**

(71) Applicant: Thomson Licensing, 92130 Issy-les-Moulineaux (FR)
(72) Inventor: ONNO, Stéphane, 35576 Cesson-Sevigne (FR); LEGALLAIS, Yvon, 35576 Cesson-Sevigne (FR); LE SCOUARNEC, Nicolas, 35576 Cesson-Sevigne (FR)
(74) Representative: Huchet, Anne

(57) **Abstract**

Network equipment (100) configured to operate a plurality of network functions (111) and to receive data packets from at least one device (10),
wherein the network equipment (100) comprises at least one classifier (112, 113) configured to receive a data packet from one device (10) and to modify, before processing by at least one network function (111), said data packet by adding an additional header comprising at least one offset field and one data field for listing at least one identifier, each identifier identifying one of the network functions (111).

## Description

### TECHNICAL FIELD

The present disclosure generally relates to the management of network functions and more particularly to the services chaining information supporting management of network functions.

### BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Telecommunication network service providers currently provide one or several middlebox services or appliances, which are computer networking devices adapted to transform, inspect, filter, or manipulate data packets other than packet forwarding. Known examples of such middlebox services are firewalls (filtering unwanted or malicious traffic), virus scanning, deep packet inspection (DPI) service, Network Address Translators NAT (modifying packets source and destination addresses), intrusion detection and prevention (IDP) service, etc. These middlebox services can require high throughput and packet inspection capabilities. They can be transparent or nontransparent to the end users (so called subscribers or customers) and can be hosted in dedicated physical hardware or in virtual machines.

When data packets need to be successively processed by several middlebox services (or network functions) in a given order (i.e., a chain of services), the services chaining can be required. In addition, when several chains of services are possible, data packets need to be steered to the right middle box services of each selected chain of services.

There is a need of a mechanism to establish such services chaining (so-called network function chaining) wherein packets, irrespective of their destination, must be forwarded along their services path (crossing a set of middlebox services implementing a given processing) with low effort and computation.

### SUMMARY

The disclosure concerns a method to be implemented at a network equipment configured to operate a plurality of network functions and to receive data packets from at least one device,
wherein said method comprises:
- receiving, by the network equipment, a data packet from one device;
- modifying, before processing by at least one network function, said data packet by adding an additional header comprising at least one offset field and one data field for listing at least one identifier, each identifier identifying one of the network functions.

In an embodiment, identifiers can be listed in the data field in an ordered list of processing by the corresponding network functions.

In an embodiment, said method can further comprise, at a network function:
- processing said data packet when received;
- updating a current value of the offset field after processing of the data packet to address said processed data packet to a next network function listed in the ordered list of processing.

In an embodiment, said network function can override at least one identifier listed in the data field.

In an embodiment, said network function can modify at least one identifier of the ordered list of processing.

In an embodiment, modifying at least one listed identifier can comprise at least one of the following operations:
- removing at least one identifier listed in the data field of the additional header;
- adding at least one identifier into the data field of the additional header;
- replacing at least one identifier listed in the data field by at least one new identifier.

In an embodiment, said additional header can further comprise a type field used to indicate that said identifiers of the data field are of heterogeneous type.

The present disclosure also concerns a network equipment configured to operate a plurality of network functions and to receive data packets from at least one device, wherein the network equipment comprises at least one memory and at least one processing circuitry configured to:
- receive a data packet from one device;
- modify, before processing by at least one network function, said data packet by adding an additional header comprising at least one offset field and one data field for listing at least one identifier, each identifier identifying one of the network functions.

Besides, the present disclosure also concerns a network equipment configured to operate a plurality of network functions and to receive data packets from at least one device,
wherein the network equipment comprises at least one classifier configured to receive a data packet from one device and to modify, before processing by at least one network function, said data packet by adding an additional header comprising at least one offset field and one data field for listing at least one identifier, each identifier identifying one of the network functions

In an embodiment, identifiers can be listed in the data field in an ordered list of processing by the corresponding network functions.

In an embodiment, a network function can be configured to:
- process said data packet when received;
- update a current value of the offset field after processing of the data packet to address said processed data packet to a next network function listed in the ordered list of processing.

In an embodiment, said network function can be configured to override at least one identifier listed in the data field.

In an embodiment, the network function can be configured to modify at least one identifier of the ordered list of processing.

In an embodiment, modifying at least one listed identifier by said network function can comprise at least one of the following operations:
- removing at least one identifier listed in the data field of the additional header;
- adding at least one identifier into the data field of the additional header;
- replacing at least one identifier listed in the data field by at least one new identifier.

In an embodiment, said additional header can further comprise a type field used to indicate that said identifiers of the data field are of heterogeneous type.

Besides, the present disclosure is further directed to a non-transitory program storage device, readable by a computer, tangibly embodying a program of instructions executable by the computer to perform a method to be implemented at a network equipment configured to operate a plurality of network functions and to receive data packets from at least one device,
wherein said method comprises:
- receiving, by the network equipment, a data packet from one device;
- modifying, before processing by at least one network function, said data packet by adding an additional header comprising at least one offset field and one data field for listing at least one identifier, each identifier identifying one of the network functions.

The present disclosure also concerns a computer program product stored on a non-transitory computer readable medium and comprising program code instructions executable by a processor for implementing a method to be implemented at a network equipment configured to operate a plurality of network functions and to receive data packets from at least one device,
wherein said method comprises:
- receiving, by the network equipment, a data packet from one device;
- modifying, before processing by at least one network function, said data packet by adding an additional header comprising at least one offset field and one data field for listing identifier, each identifier identifying one of the network functions.

The method according to the disclosure may be implemented in software on a programmable device. It may be implemented solely in hardware or in software, or in a combination thereof.

Some processes implemented by elements of the present disclosure may be computer implemented. Accordingly, such elements may take the form of an entirely hardware embodiment, an entirely software embodiment (including firmware, resident software, micro-code, etc.) or an embodiment combining software and hardware aspects that may all generally be referred to herein as "circuit", "module" or "system". Furthermore, such elements may take the form of a computer program product embodied in any tangible medium of expression having computer usable program code embodied in the medium.

Since elements of the present disclosure can be implemented in software, the present disclosure can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like.

The disclosure thus provides a computer-readable program comprising computer-executable instructions to enable a computer to perform the method aforementioned.

Certain aspects commensurate in scope with the disclosed embodiments are set forth below. It should be understood that these aspects are presented merely to provide the reader with a brief summary of certain forms the disclosure might take and that these aspects are not intended to limit the scope of the disclosure. Indeed, the disclosure may encompass a variety of aspects that may not be set forth below.

### BRIEF DESCRIPTION OF THE DRAWINGS

The disclosure will be better understood and illustrated by means of the following embodiment and execution examples, in no way limitative, with reference to the appended figures on which:
- Figure 1 is a schematic diagram of an example of a network environment adapted to implement some embodiments of the present principles;
- Figure 2 shows an exemplary services chain header for managing services chaining in a network equipment, in accordance with the present principles;
- Figure 3 is a flow chart of an exemplary method for managing services chaining in a network equipment, according to the present principles;
- Figures 4 and 5 are flow charts depicting examples of services chaining management with, respectively, homogeneous identifiers and heterogeneous identifiers, according to the present principles;
- Figure 6 shows an example of a hardware configuration of each device/host of network equipment of the Figure 1, according to the present principles.

Wherever possible, the same reference numerals will be used throughout the figures to refer to the same or like parts.

### DETAILED DESCRIPTION

The following description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes that may be substantially represented in computer readable media and so executed by a computer or processor, whether or not such computer or processor is explicitly shown.

The functions of the various elements shown in the figures may be provided with dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

In the claims hereof, any element expressed as a means and/or module for performing a specified function is intended to encompass any way of performing that function including, for example, a) a combination of circuit elements that performs that function or b) software in any form, including, therefore, firmware, microcode or the like, combined with appropriate circuitry for executing that software to perform the function. It is thus regarded that any means that can provide those functionalities are equivalent to those shown herein.

In addition, it is to be understood that the figures and descriptions of the present disclosure have been simplified to illustrate elements that are relevant for a clear understanding of the present disclosure, while eliminating, for purposes of clarity, many other elements found in typical digital multimedia content delivery methods, devices and systems. However, because such elements are well known in the art, a detailed discussion of such elements is not provided herein. The disclosure herein is directed to all such variations and modifications known to those skilled in the art.

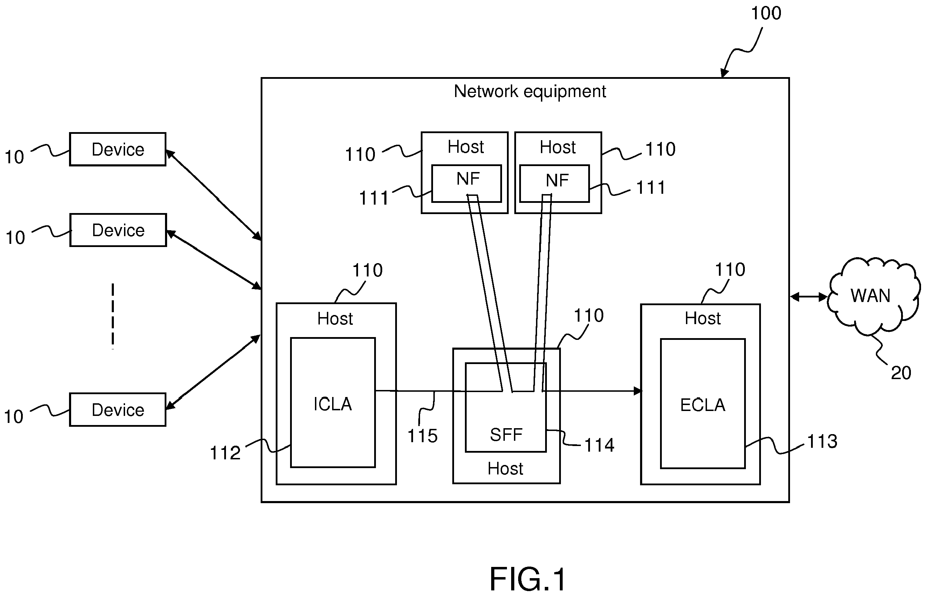

Figure 1 is a schematic diagram of an exemplary network infrastructure comprising a network equipment 100 (such as a customer premise equipment CPE) and several devices 10 (such as a switch, a portable media device, a mobile phone, a Set Top Box, a laptop, etc.) in communication with the network equipment 100 (e.g., via cable, optic fiber, xDSL, satellite, LTE, 3G technologies, etc.). It should be understood that further apparatuses (not shown) can be arranged between a device 10 and the network equipment 100.

As shown on figure 1, the network equipment 100 can comprise one or several physical hosts 110 (in the example of Figure 1, five hosts 110 are illustrated) belonging for instance to a datacenter. Each host 110 can run one or several network functions 111 (such as DHCP, DNS, Firewall, Parental Control, Intrusion Prevention System, Virus Scanning, Deep Packet Inspection, Network Address Translators, etc.). In other words, network functions providing by a network equipment 100 can be distributed over several hosts 110.

The network equipment 100 can further provide connectivity to a Wide Area Network (WAN) 20 (such as Internet) to the network devices 10.

In the following, it is assumed that network configuration between devices 10 and the network equipment 100 is already obtained.

In addition, as further shown in the example of Figure 1, the network equipment 100 can comprise the following network functions:
- an ingress classifier (ICLA) 112 configured to receive data packets from devices 10 (eventually after network processing such encapsulation and de-encapsulation operations) and to address data packets from the WAN 20 to the corresponding devices 10, and conversely;
- an egress classifier (ECLA) 113 configured to receive either data packets from devices 10 after processing, for example, by one or several network functions 111 and directed to WAN 20; or data packets from WAN 20 and directed to devices 10;
- one or several service function forwarders (SFF) 114 (only one is shown on the Figure 1) which can be configured to receive data packets from the ingress classifier ICLA 112 or egress classifier ECLA 113, from a NF 111 after processing, from another SFF 114 (not shown on Figure 1). Each SFF 114 can be further configured to forward data packets, received either from the ingress classifier ICLA 112, or from a NF 111 or from another SFF 114, to a further NF 111 according to some services chaining information. Finally, a SFF 114 can be further configured to end a services chain of network functions.

It should be understood that one or several network functions can be executed on a same host 110.

In the example of Figure 1, the network equipment is configured to support implementation of a plurality of chain of network functions 111 (also called services chain or services path).

In an embodiment according to the present principles, in order to support services chaining, the ingress classifier ICLA 112 and the egress classifier ECLA 113 can encapsulate every data packet it receives by adding a services chain header (also called self-contained header).

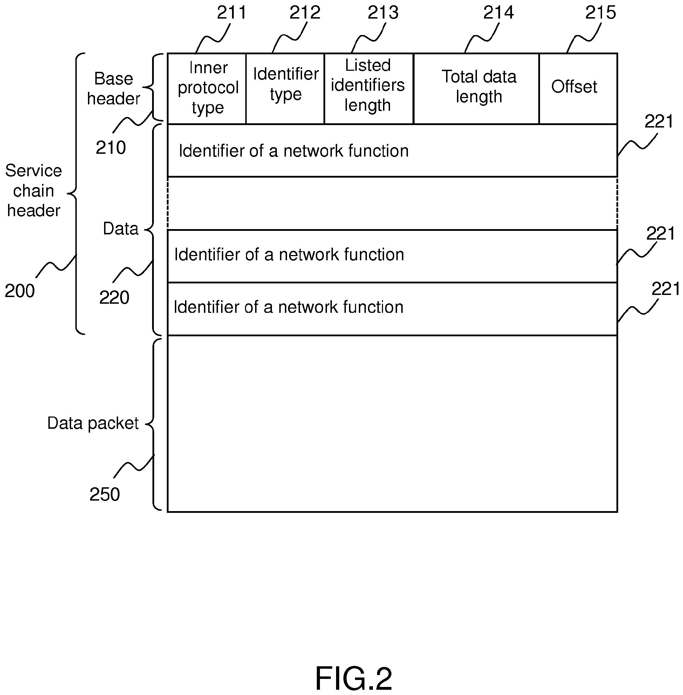

As shown in the illustrative but non limitative example of Figure 2, a services chain header can comprise a base header 210 and a data field 220. The base header 210 can further comprise:
- a field 211 to define the protocol type of the original inner data packet (e.g., 00 for IPV4, 01 for IPV6, 02 for Ethernet, 03 for VXLAN, etc.);
- a field 212 to specify the type of an identifier of a network function 110. The type of an identifier can be a network address, a network port, a process identifier that a SFF 114 being addressed can resolve, etc. An identifier type can be a byte value (such as 00 for IPV4 address, 01 for IPV6 address, 02 for MAC address, 11 for logical port, 12 for physical port, 30 for process ID, etc.);
- a field 213 to indicate the length of identifiers listed in the data field of the services chain header. As an example, network addresses can be 4 bytes long for IPV4, 6 bytes long for MAC address or even 16 bytes long for IPV6. As a variant or as a complement, the length of each network function identifier can be computed from the identifier type value;
- a field 214 to specify the total data length of the services chain header (including the base header 210);
- a field 215 configured to carry an offset. Each network function 111 is configured to update the offset associated with a data packet after processing. This offset indicates to a forwarder SFF 114 the position of, within the data field 220 of the services chain header 200, the identifier of the next network function 111 which should receive the data packet. The offset value provides the location within a services chain. It is assumed that the initial value of the offset, set either by the ICLA 112 or ECLA 113, corresponds to the length of the base header 210 (e.g., 4 bytes). Naturally, other values can be used.

Naturally, the services chaining header is not limited to the above listed fields and can comprise additional fields, for instance, distributed in the base header or in the data field.

In a variant compliant with the present principles, the field 212 of the base header 210 can be filled with a particular value (OxFF) indicating that the considered data packet is encoded in a TLV (Type Length Value) mode. The TLV mode can be implemented when identifiers of network functions are heterogeneous (i.e., they are not from a single type, such as IP address or MAC address).

In an embodiment compliant with the present principles, the data field 220 can comprise an ordered list of network functions 111 to process a data packet of a given device 10. To this end, the ordered list of network functions 111 - which defines a services chain - can comprise the corresponding identifiers 221 of the network function 111. An example of a services chain 115 (comprising two network functions 111 and the ECLA 113) is shown in Figure 1.

When identifiers 221 of network functions are of the same type (such as IP address, MAC address, port number, etc.), the data field 220 can comprise an ordered list of identifiers (e.g., a list of IP addresses) identifying the network functions of a services chain to be applied to a data packet (the identifier of the ICLA or the ECLA can be listed in the ordered list). In that case, when a forwarder SFF 114 receives a data packet encapsulated with the services chain header 200, said forwarder SFF 114 can be configured to address said data packet to the next network function 111 identified in the ordered list, based on the value of the current offset 215. After completion and before sending back the data packet to the SFF 114, the network function 111 can increment the current offset 115 enabling the SFF 114 to consider the next identifier of the chain to steer the traffic to a next network function 111, ICLA 110 or ECLA 113. The network function 111 can update the current offset 215 based on the current offset value 215 and of the listed identifier length 213 of the base header 210.

In a refinement, the identifiers of same type of an ordered list can have a common part, so that only the different part(s) can be introduced into the data field 220 of the services chain header 200, decreasing the overall size of the latter. For example, if all involved hosts are located within the same Local Area Network 192.168.1.0-255 (e.g., 192.168.1.12) with a subnet mask 255.255.255.0, a data field of a compressed IP address of the last byte represented by 0-255 above (e.g., value 12 from the IP address above) is enough instead of the 4 bytes for the whole IP address. The same compression can be applied on MAC addresses 11 :11 :11 :11 :11 :00-FF from 6 bytes (e.g., 11 :11 :11 :11 :11 :2E) to only the last byte represented by the range 00-FF (e.g., value 2E from Mac address above) if the MAC addresses on the LAN are configured for each host resulting in the same five beginning bytes for all hosts. This is often the case on datacenters with a network fabric technology and in particular MAC Fabric for the latter. Therefore, the identifier type field 212 (shown in Figure 2) can specify additional values (such as 100 for compressed IPV4 address, 101 for compressed IPV6 address, 102 for compressed MAC address, etc.). It can be noted that one byte identifier is already used when the identifier type is a port number of a SFF 114.

When identifiers 221 are heterogeneous (e.g., a mix of IP address, MAC address, port number, etc.), the data field 220 can comprise an ordered list of identifiers encoded in the TLV mode (i.e., the encoded identifier comprises a type, a length and a value). The value of the field 213 (i.e., listed identifier length) can be empty (i.e., there are several types of identifiers). In that case, when a forwarder SFF 114 receives a data packet encapsulated with the services chain header 200, said forwarder SFF 114 can be configured to address said data packet to the next network function 111 identified in the ordered list, based on the value V of the current TLV identifier. After completion and before sending back the data packet to the SFF 114, the network function 111 can increment the current offset 115 enabling the SFF 114 to consider the next TLV identifier in the services chain to steer the traffic to the corresponding network function 111, ICLA 110 or ECLA 113. The network function 111 can update the offset 215 based on its current value and the current length value L of the current identifiers encoded in TLV mode in the data field 220.

Whatever the type of identifiers (the same or heterogeneous), the ordered list can comprise the exact number of network functions of the services path associated with a given data packet.

In addition, it is assumed that the ingress classifier ICLA 112 and the egress classifier ECLA 113 have been preliminary configured with services chaining information. They are aware of the services path to be associated with a data packet coming from a given device 10.

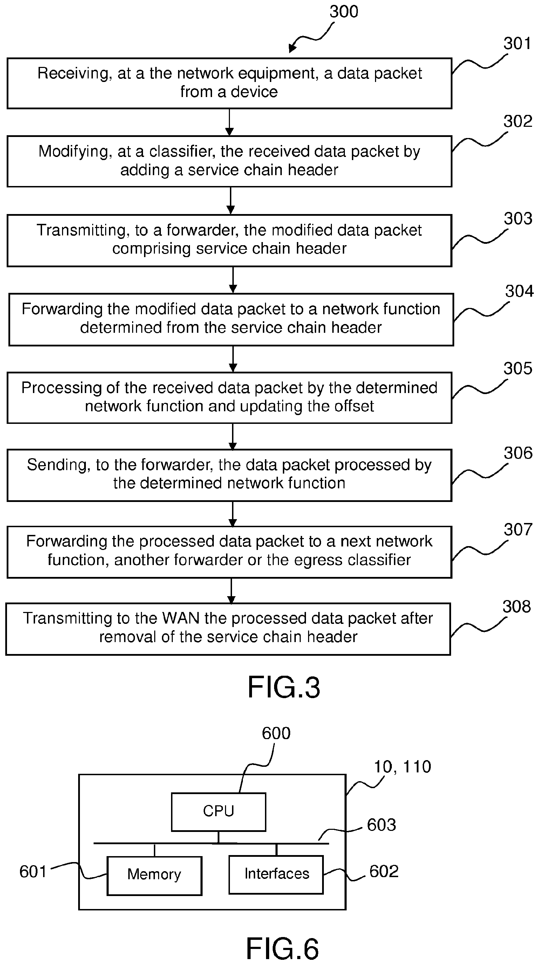

As shown in Figure 3, the method 300 implemented at the network equipment 100 and compliant with the present principles can comprise:
- receiving (step 301), by the network equipment 100, a data packet from a device 10 in connection with the network equipment 100 and directed to the WAN 20;
- modifying (step 302) at the ingress classifier ICLA 112, before processing by one or several network functions 111, the received data packet by adding a services chain header 200 comprising an ordered list of identifiers associated with network functions 111;
- transmitting (step 303) to a forwarder SFF 114 the modified data packet;
- forwarding for processing (step 304) the modified data packet to a network function 111 determined from the ordered list of the services chain header 200;
- processing (step 305) of the received data packet by the determined network function 111 and updating the offset 215 of the services chain header 200;
- sending (step 306), to the forwarder SFF 114, the data packet processed by the determined network function 111;
- forwarding (step 307) the processed data packet to either a next network function 111 of the ordered list, another forwarder SFF 114 or to the egress classifier ECLA 113;
- transmitting (step 308), to the WAN 300, the data packet, once received by the ECLA 113, after having been processed by all network functions 111 listed in the services chain header 200. Before transmission to the WAN 300, the egress classifier ECLA 113 can remove the services chain header 200 to the data packet, previously added by the ingress classifier ICLA 112.

When a data packet coming from the WAN 300 and directed to a given device 10 is received at the network equipment 100 by the egress classifier ECLA 113, steps of the method 300 can further apply by switching the ingress classifier ICLA 112 with the egress classifier ECLA 113. In that case, the ordered list of the services chain header 200 associated with the received data packet can comprise the identifier of the ICLA 112 in the last position of the ordered list.

It should be noted that the services chain header can comprise a flag indicating that the services path (e.g., [NF1, NF2, ECLA]) is symmetric, meaning that the same network functions need to be applied in the default reverse order when the same classified data packet comes back from the WAN 20 (e.g [NF2,NF1, ICLA]). The egress classifier ECLA can track and save the ordered list of the services chain header.

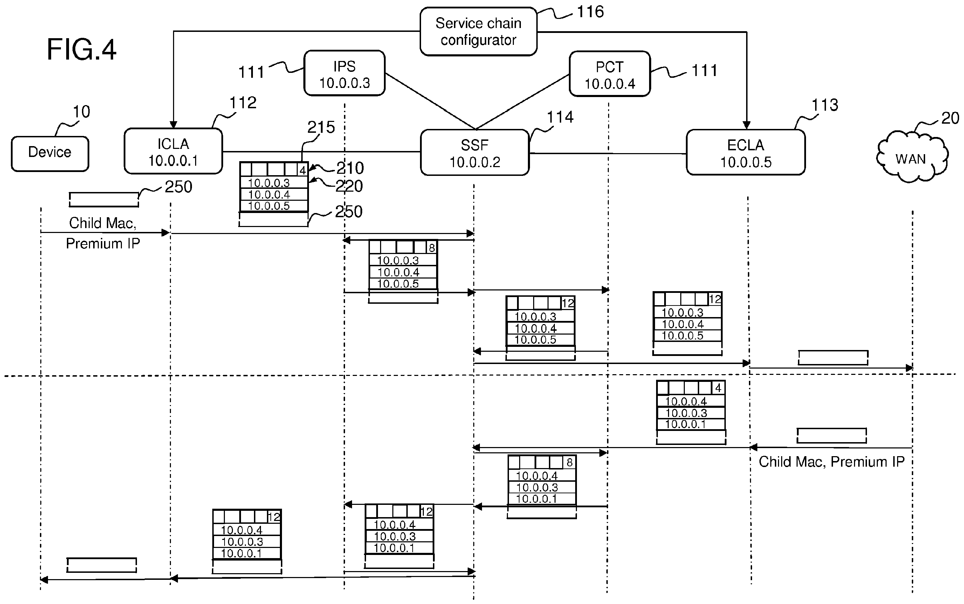

Figure 4 is an example of the management of services chaining, according to the present principles, in a network equipment 100 when identifiers of network functions are of the same type (an IP address of a host 110 providing a network function). In the example, each host 110 is assigned an IP address, provides a particular network function at a time and is connected to an identified port of a forwarder SFF 114 belonging to the services chaining, i.e., between an ingress classifier ICLA 112 and egress classifier ECLA 113.

It is assumed that the underlying IP network comprises means to resolve and route the traffic to a given host 110. A forwarder SFF 114 - receiving a packet from an IP address - can determine the MAC address of the host from an IP address (e.g., with an ARP request) and can resolve which port the host Mac address corresponds with its internal Mac Learning mean.

In the example, a data packet from a device 10 (e.g., the device belonging to a child) is associated with a services path defined by two network functions 111: IPS (Intrusion Prevention Service) then PCT (Parental Control), followed by the egress classifier ECLA 113.

A services chain configurator 116 can preliminarily configure the ingress classifier ICLA 112 and egress classifier ECLA 113 with information associated with the considered device 10 (child's device with a premium profile). To this end, lookup tables can be updated at the ICLA 112 and at the ECLA 113, respectively. In such a lookup table, a MAC address of a given device with a particular profile can for instance be associated with a services path (e.g., defined by an ordered list of IP addresses). In the example, the child's device 10 of a premium subscriber profile is identified by its MAC address and a subscriber identifier resulting from a subscriber Tunnel ID (e.g., GRE ID or VXLAN ID) or from the outer IP address of the subscriber (i.e., the IP address used to convey LAN packets to the network equipment 100). The child's device 10 is associated with the services path defined by the IP address of the IPS network function (e.g., 10.0.0.3) then the IP address of the PCT network function (e.g., 10.0.0.4) and then the IP address of the ECLA 112 (e.g., 10.0.0.5). To that end, in the example, the services chain configurator 116 has preliminarily configured both ICLA 112 and ECLA 113 for a Child device having subscribed the Premium service with ending to an entry for ICLA (Mac address child device, Premium outer home IP address) (i.e., 10.0.0.3, 10.0.0.4, 10.0.0.5) and, conversely, for ECLA (Mac address child device, Premium outer home IP address) (i.e., 10.0.0.4, 10.0.0.3, 10.0.0.1) for a symmetric chain.

It should be understood that the way services chains are associated with a device can depend on subscription pattern.

When a data packet matches one of the ICLA lookup table entries (in the example of Figure 4, a data packet from the child's device), the ICLA 112 adds a services chain header 200 on the top of the inner data packet 250. As shown in the example of Figure 4, the services chain header 200 added to the data packet 250 coming from the child's device 10 comprises in particular an offset 215 set to a value of 4 bytes (corresponding to the length of the base header 210) and a data field 220 comprising an ordered list of IP addresses (i.e., 10.0.0.3, 10.0.0.4, 10.0.0.5) defining the services path to be applied on the received data packet.

Upon receipt of the encapsulated data packet from the ICLA 112, the SFF 114 forwards said data packet to the first network function listed in the services chain header 200 (i.e., the network function IPS), after reading of the value of the identifier type 212 (i.e., type: IPV4, address value: 10.0.0.3) and of the offset field 215 (set in the example to 4 bytes) to retrieve the corresponding identifier in the data field 220.

After processing of the data packet and updating the offset field 215 (e.g., to 8, corresponding to the previous value with the length of the read identifier), the network function IPS (IP address 10.0.0.3) sends back the processed data packet to the forwarder SFF 114 which then forwards it to the next network function PCT of the services path defined in the services chain header 200, after retrieving the corresponding identifier from the value of the offset field 215 and the identifier type 212 (i.e., type: IPV4, address value: 10.0.0.4 corresponding to network function PCT). The network function PCT then processes the data packet and updates the offset field 215 (e.g., to 12), before transmission to the forwarder SFF 114.

Then, the forwarder SFF 114 reads the updated value of the offset field 215 and the corresponding identifier with the identifier type 212 (e.g., type: IPV4, address value: 10.0.0.5 corresponding to network function ECLA) before forwarding it to the egress classifier ECLA 113.

Upon receipt of the encapsulated data packet, the ECLA 113 removes the services chain header before addressing the data packet to the WAN 20 (eventually after being processed by additional network elements not shown in the Figures).

Example of Figure 4 further describes a data packet coming from WAN 20 and directed to child's device 10. Services path associated to such a data packet coming from WAN 20 comprises the PCT network function, the IPS network function and the ICLA 112 as the last network function ending the services path. The ECLA 113 receiving the data packet from the WAN 20 adds a services chain header 200 in the same way as previously described with regard to ICLA 112. At the end of the services path, the ICLA 112 removes the services chain header before addressing the processed data packet to the child's device 10.

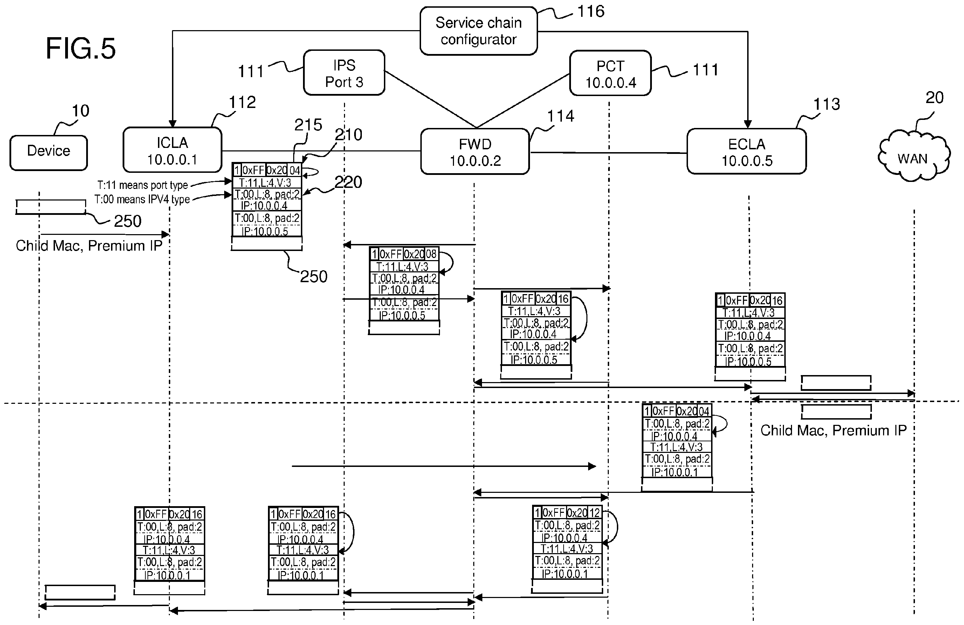

Figure 5 is another example of the management of services chaining, according to the present principles, when identifiers of network functions are heterogeneous (i.e., from different types such an IP address of the host of a network function or a physical or logical port, for instance, of a forwarder). In this example, the forwarder SFF 114 (IP address 10.0.0.2) connects IPS network function through its internal port 3 (e.g., the forwarder SFF and the network function are on a same host 110) and the PCT network function through IP address (e.g., 10.0.0.4). The services path associated with a data packet received from the child's device 10 is similar as the one described with regard to Figure 4.

Whereas the services chain header 200 added to the data packet contains the type of the identifiers in Figure 4, the identifier type field 212 of the header 200 comprises the value OxFF indicating that the TLV mode is implemented (the identifiers of the data field 220 of the services chain header 200 are encoded in a TLV format).

The behavior of the ICLA 112, network functions IPS and PCT, the forwarder SFF 114 and ECLA 113 of Figure 5 is similar to the one described in relation to Figure 4, except that the forwarder SFF 114 needs to parse the previous identifiers (listed in the data field 220) to find the identifier of the network function to be addressed, from the offset value 215.

In particular, upon receipt of the encapsulated data packet from the ECLA 112, the SFF 114 can forward the data packet to the first network function listed in the services chain header 200, after reading the value of the identifier type 212 (e.g., OxFF meaning TLV support) and the value of the offset field 215 (set in the example to 4 bytes) to retrieve the corresponding TLV identifier to consider. The SFF 114 can then extract the identifier type and the identifier value (i.e., type: 11 meaning port type, value: 3 meaning the port number 3) from the TLV and can forward the data packet to the corresponding network function (e.g., IPS).

Said network function (e.g., IPS) can process the data packet and can update the offset field 215 to the value 8, corresponding to the current offset value 4 augmented with the length L of the current TLV identifier value 4 (i.e., the length of a TLV type port). The network function (e.g., IPS, port number 3) can send back the processed data packet to the forwarder SFF 114 which then forwards it to the next network function (e.g., PCT) of the services path defined in the services chain header 200, after retrieving the corresponding TLV identifier (i.e., type: 00 meaning IPV4 type, value: 10.0.0.4) from the value of the offset field 215 and the identifier type 212. The network function (PCT) can then process the data packet and can further update the offset field 215 to the value 16 (corresponding to the previous value 8 augmented with the length L of a current TLV value 8 (length of a TLV for type IPV4)), before transmission to the forwarder SFF 114.

Again, the forwarder SFF 114 can forward it to the next network function (e.g., ECLA 113) of the services path defined in the services chain header 200, after retrieving the corresponding TLV identifier (i.e., type: 00 meaning IPV4 type, value: 10.0.0.5) from the value of the offset field 215 (i.e., 16) and the identifier type 212 (i.e., FF).

Upon receipt of the encapsulated data packet, the ECLA 113 can remove the services chain header 200 before addressing the data packet to the WAN 20 (eventually after being processed by additional network elements not shown in the Figures).

In another embodiment compliant with the present principles, the list of the identifiers of network functions are not in an ordered list, but in a random list comprising all available network functions to apply on data packets. The random list can also be a subset of all available network functions.

In further embodiment of the present principles, a network function can even add, modify or delete one or several identifiers of an ordered list or a random list. For consistency, the network function should also update the network function offset correspondingly. In that case, each network function can evaluate its local output and can modify the services chain header 200 of an encapsulated data packet to steer the traffic towards any network function belonging to the list. Considering a services path defined with an alternative network function (e.g., NF1, NF2 or NF3, NF4, ECLA) wherein output of network function NF1 can be either network function NF2 or NF3 depending on internal result of network NF1. In such a case, the ordered list of data field 220 (e.g., initially set to [NF1, NF2, NF4, ECLA, NF3]) can be adapted and updated by the network function NF1 to become [NF1, NF3, NF4, ECLA, NF2].

In another embodiment of the present principles, a network function of a services path to be applied on a data packet can override the ordered list of identifiers set in the service function header. Overriding operation can comprise bypassing one or several network functions of the list of identifiers, coming back again to a network function already applied to said data packet and even more replace an identifier of the list by a new one, depending on particular conditions. For instance, when considering the services path [NF1, NF2, ECLA], in case of error or troubleshooting, the network function NF1 of the services path can update the list of identifiers of the services chain header accordingly (e.g., path [NF1, NF3, NF2, ECLA] wherein NF3 is a troubleshooting network function.

In another embodiment, a network function of the ordered list of a services path to be applied on a data packet can decide, by itself, to steer traffic to a particular instance of the next network function of the ordered list when several instances exist for that network function. To this end, network functions (some or all) of the network equipment need to be aware of the different instances of network functions, for instance, thanks to a discovery phase wherein each instance of network function execute a discovery protocol (e.g., broadcasting of a discovery message all over the network equipment). For example, when considering the services path [NF1, NF2a, ECLA] listed in the services chain header of a data packet, the ingress classifier ICLA can set the ordered list with identifiers of a first instance NF2a of the second network function NF2 of the services path, whereas other instances NF2b and NF2c of this second network function are operated in the network equipment and have been discovered during the discovery phase. The network function NF1 can also receive these discovery responses of the different instances NF2a, NF2b and NF2c of the second network function NF2 and consequently can modify the ordered list of the services chain header with [NF1, NF2b, ECLA] or [NF1, NF2c, ECLA] according to, for example, a round robin decision.

In addition, an additional field of the services chain header 200 (not shown in the Figures) can be added in order to indicate whether an ordered list can be modified by network functions of the services path (some network functions might be allowed, other not). Such an additional field can be filled for instance by the ICLA or the ECLA.

In these embodiments, the offset field 215 can be updated when necessary due to a change of identifier (especially when TLV mode is implemented)
Besides, it should be understood that the global length of the services chain header 200 added to the header can be fixed or variable.

Thanks to the services chain header, it can be possible retrieve the history of the full processing on a given data packet, even when some modifications are applied along a services path by network functions.

In addition, the self-contained service header can carry all the information required by the forwarders. The configuration does not depend on a particular services chain but only on how to process the self-contained service header for any forwarder. Thus, the self-contained header can prevent difficulties configuring a forwarder SFF depending on the complexity of services paths and can prevent configuration issues such as atomicity, consistency and synchronization with classifiers. In addition, the self-contained header can increase the overall performance since it only needs to compute the incoming data packet to find its next network function: there is no need to access a lookup or hash table, at the forwarder level, or even more to access to memory at user's side or process to find that destination.

As shown in Figure 6 depicting one example of a hardware configuration, each of the respective devices 10 and hosts 110 of the network equipment 100 can comprise a Central Processing Unit (CPU) 600 (comprising one or several processors), a memory 601 and one or several interfaces 602 connected together via a bus 603. The CPU 600 is configured for processing various data and for controlling various function and components of each of the respective device 10 and hosts 110. The memory 601 may represent both a volatile memory such as RAM, and a non-transitory memory such as a ROM, a hard drive or a flash memory, for processing and storing different files and information as necessary, including computer program products and software. Some of the above-mentioned network functions and/or applications shown in Figure 1 can be implemented by computer-readable programs stored in the memory 601 of hosts 110. The interfaces 602 are used to communicate between the respective devices 10 and hosts 110 through wired or wireless connection(s). Interfaces 602 can further comprise user input and/or output elements (e.g., a touch panel, a display screen, a keyboard, a remote control, etc.)

In the Figures, it is to be appreciated that the illustrated blocks or modules can correspond to functional modules, which may or may not correspond to distinguishable physical units. For example, a plurality of such modules may be associated in a unique component or circuit, or correspond to software functionalities. Moreover, a module may potentially be composed of separate physical entities or software functionalities.

References disclosed in the description, the claims and the drawings might be provided independently or in any appropriate combination. Features may be, where appropriate, implemented in hardware, software, or a combination of the two.

Reference herein to "one embodiment" or "an embodiment" means that a particular feature, structure, or characteristic described in connection with the embodiment can be included in at least one implementation of the method and device described. The appearances of the phrase "in one embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

Although certain embodiments only of the disclosure have been described herein, it will be understood by any person skilled in the art that other modifications, variations, and possibilities of the disclosure are possible. Such modifications, variations and possibilities are therefore to be considered as falling within the spirit and scope of the disclosure and hence forming part of the disclosure as herein described and/or exemplified.

The flowchart and/or block diagrams in the Figures illustrate the configuration, operation and functionality of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, or blocks may be executed in an alternative order, depending upon the functionality involved. It will also be noted that each block of the block diagrams and/or flowchart illustration, and combinations of the blocks in the block diagrams and/or flowchart illustration, can be implemented by special purpose hardware-based systems that perform the specified functions or acts, or combinations of special purpose hardware and computer instructions. While not explicitly described, the present embodiments may be employed in any combination or sub-combination.

## Claims

1. Method to be implemented at a network equipment (100) configured to operate a plurality of network functions (111) and to receive data packets (250) from at least one device (10),
wherein said method (300) comprises:
- receiving (301), by the network equipment (100), a data packet (250) from one device (10);
- modifying (302), before processing by at least one network function (111), said data packet (250) by adding an additional header (200) comprising at least one offset field (215) and one data field (220) for listing at least one identifier (221), each identifier identifying one of the network functions (111).

2. Method according to claim 1, wherein identifiers (221) are listed in the data field (220) in an ordered list of processing by the corresponding network functions (111).

3. Method according to claim 2, further comprising, at a network function (111):
- processing (305) said data packet when received;
- updating (305) a current value of the offset field (215) after processing of the data packet (250) to address said processed data packet to a next network function (111,112, 113) listed in the ordered list of processing.

4. Method according to claim 2 or 3, wherein said network function overrides at least one identifier (221) listed in the data field (220).

5. Method according to claim 2 or 3, wherein said network function modifies at least identifier (221) of the ordered list of processing.

6. Method according to claim 5, wherein modifying (302) at least one listed identifier (221) comprises at least one of the following operations:
- removing at least one identifier (221) listed in the data field (220) of the additional header (200);
- adding at least one identifier (221) into the data field (220) of the additional header;
- replacing at least one identifier (221) listed in the data field by at least one new identifier.

7. Method according to claims 1 to 6, wherein said additional header (200) further comprises a type field (212) used to indicate that said identifiers (221) of the data field are of heterogeneous type.

8. Network equipment configured to operate a plurality of network functions (111) and to receive data packets (250) from at least one device (10),
wherein the network equipment (100) comprises at least one memory (601) and at least one processing circuitry (600) configured to:
- receive (301) a data packet (250) from one device (10);
- modify (302), before processing by at least one network function (111), said data packet (250) by adding an additional header (200) comprising at least one offset field (215) and one data field (220) for listing at least one identifier (221), each identifier identifying one of the network functions (111).

9. Network equipment configured to operate a plurality of network functions and to receive data packets from at least one device,
wherein the network equipment (100) comprises at least one classifier (112, 113) configured to receive a data packet (250) from one device (10) and to modify, before processing by at least one network function (111), said data packet (250) by adding an additional header (200) comprising at least one offset field (215) and one data field (220) for listing at least one identifier (221), each identifier (221) identifying one of the network functions.

10. Network equipment according to claim 9, wherein identifiers (221) are listed in the data field (220) in an ordered list of processing by the corresponding network functions (111).

11. Network equipment according to claim 10, wherein a network function (111) is configured to:
- process (305) said data packet (250) when received;
- update (305) a current value of the offset field (215) after processing of the data packet (250) to address said processed data packet to a next network function (111) listed in the ordered list of processing.

12. Network equipment according to claim 10 or 11, wherein said network function (111) is configured to override at least one identifier (221) listed in the data field (220).

13. Network equipment according to claim 10 or 11, wherein said network function (111) is configured to modify at least one identifier (221) of the ordered list of processing.

14. Network equipment according to claim 13, wherein modifying at least one listed identifier (221) by said network function (111) comprises at least one of the following operations:
- removing at least one identifier (221) listed in the data field (220) of the additional header (200);
- adding at least one identifier into the data field of the additional header;
- replacing at least one identifier listed in the data field by at least one new identifier.

15. Computer program product stored on a non-transitory computer readable medium and comprising program code instructions executable by a processor for implementing a method (300) to be implemented at a network equipment (100) configured to operate a plurality of network functions (111) and to receive data packets (250) from at least one device (10),
wherein said method (300) comprises:
- receiving (301), by the network equipment (100), a data packet (250) from one device (10);
- modifying (302), before processing by at least one network function (111), said data packet (250) by adding an additional header (200) comprising at least one offset field (215) and one data field (220) for listing at least one identifier (221), each identifier identifying one of the network functions (111).
